# EUROPEAN PATENT APPLICATION

(11) **EP 4 810 321 A1**
(43) Date of publication of application: **23.09.2026**
(21) Application number: 24893300.4
(22) Date of filing: 12.11.2024
(51) Int. Cl.: B60R 1/22, B60R 1/04

(54) **INTELLIGENT DRIVING METHOD AND RELATED DEVICE**

(30) Priority: 20.11.2023 CN 202311556375
(71) Applicant: Yinwang Intelligent Technologies Co., Ltd., Shenzhen, Guangdong 518110 (CN)
(72) Inventor: WANG, Xingwu, Shenzhen, Guangdong 518129 (CN); PENG, Xu, Shenzhen, Guangdong 518129 (CN); XING, Xiao, Shenzhen, Guangdong 518129 (CN); ZHENG, Leibin, Shenzhen, Guangdong 518129 (CN); CHEN, Lihui, Shenzhen, Guangdong 518129 (CN)
(74) Representative: Pfenning, Meinig & Partner mbB
(86) International application number: PCT/CN2024/131496
(87) International publication number: WO 2025/108142

(57) **Abstract**

An intelligent driving method and a related apparatus are provided, and are applied to the intelligent driving field. In this application, two side cameras located on sides of an intelligent driving terminal and a rear camera located on the rear of the intelligent driving terminal are used to capture an image in a driving process. This eliminates the need to redeploy left and right cameras in an electronic rearview mirror system, thereby improving a vehicle body shape. In addition, an autonomous driving controller is reused to process the captured image and send a processed image for display, implementing a function of an electronic rearview mirror, and therefore reducing costs of the entire vehicle. In conclusion, this application can greatly reduce costs and improve the vehicle body shape while implementing the rearview function. In addition, with high-performance sensing and computing capabilities of the autonomous driving controller, a user can be provided with richer experience, and driving safety can be improved.

## Description

This application claims priority to Chinese Patent Application No. 202311556375.1, filed with the China National Intellectual Property Administration on November 20, 2023 and entitled "INTELLIGENT DRIVING METHOD AND RELATED APPARATUS", which is incorporated herein by reference in its entirety.

### TECHNICAL FIELD

This application relates to the field of intelligent driving, and in particular, to an intelligent driving method and a related apparatus.

### BACKGROUND

Safe driving of a vehicle relies on many functions. For example, a rearview function is used to ensure safe driving of a vehicle in a visualized manner. The rearview function can provide a driver with a field of view picture of a current environment, so that the driver can observe a vehicle approaching from behind or the like and make a decision in a timely manner. The rearview function may be implemented by using a solution such as an optical rearview mirror or an electronic rearview mirror. In a display mode of the electronic rearview mirror, a camera monitors a field of view of a physical rearview mirror, and transmits video data to a controller of the electronic rearview mirror through a video interface. The controller of the electronic rearview mirror sends the video data to an independent display screen for display through the video interface.

However, on a current intelligent driving terminal, a large quantity of sensors are deployed around a vehicle body. In this case, if an electronic rearview mirror is installed, a camera of the electronic rearview mirror may overlap a sensor on the intelligent driving terminal, which causes redundancy in a design of a vehicle body shape and increases costs.

Therefore, how to reduce costs and improve the vehicle body shape while implementing the rearview function is an urgent problem to be resolved by a person skilled in the art.

### SUMMARY

This application provides an intelligent driving method and a related apparatus, to reduce costs and improve a vehicle body shape while implementing a rearview function.

**According to a first aspect,** this application provides an intelligent driving method, applied to an autonomous driving controller. The autonomous driving controller is included in an intelligent driving terminal. The intelligent driving terminal further included two side cameras located on a side of the intelligent driving terminal and a rear camera located on the rear of the intelligent driving terminal. The method includes:
acquiring a first image and a second image that are respectively captured by the two side cameras, and obtaining a target image by processing the first image and the second image, where the target image indicates a field of view picture of a rearview mirror angle for the intelligent driving terminal, and the target image is used for intelligent driving.

Optionally, the intelligent driving terminal further includes the rear camera located on the rear of the intelligent driving terminal, and obtaining the target image by processing the first image and the second image includes: acquiring a third image captured by the rear camera; and obtaining the target image by processing the first image, the second image, and the third image.

The autonomous driving controller may be connected to a plurality of sensors installed in a vehicle. The sensors include but are not limited to a millimeter-wave radar, a camera, a lidar, a global positioning system (global positioning system, GPS), and the like. The autonomous driving controller can acquire data captured by these sensors, and obtain a driving decision through algorithm processing and output the driving decision. The autonomous driving controller has relatively high computing power, and can acquire rich sensing information. Therefore, the autonomous driving controller may be configured to implement a rearview function.

The two side cameras can capture field of view pictures of left and right sides of the intelligent driving terminal, and the rear camera can capture a field of view picture of the rear of the intelligent driving terminal. Therefore, the field of view picture of the rearview mirror angle in this application may be obtained based on the field of view pictures of the left and right sides, or may be obtained through fusion of the field of view pictures of the left and right sides and the field of view picture of the rear. Compared with a conventional rearview mirror, the rearview mirror in this application may cover a larger visual field of view range and have larger field of view adjustment space.

In this application, an image in a driving process is captured by using the two side cameras and the rear camera. This eliminates the need to redeploy the left and right cameras in an electronic rearview mirror system, or even install an optical rearview mirror, thereby improving a vehicle body shape. In addition, in this application, the autonomous driving controller is reused to process the captured image, implementing a function of an electronic rearview mirror, and therefore reducing costs of the entire vehicle. In conclusion, this application can greatly reduce costs and improve the vehicle body shape while implementing the rearview function.

In addition, with high-performance sensing and computing capabilities of the autonomous driving controller, a user can be provided with richer experience, and driving safety can be improved.

**In a possible implementation,** the intelligent driving terminal further includes a screen, and after obtaining the target image by processing the first image, the second image, and the third image, the method further includes: sending the target image to the screen for display.

**In another possible implementation,** the screen includes a first screen and a second screen, and the first screen includes a left screen and/or a right screen; and the target image includes a first target image and a second target image, the first target image and the second target image respectively indicate field of view pictures of rearview mirror angles on the two sides of the intelligent driving terminal, the left screen is used to display the first target image, and the right screen is used to display the second target image.

Optionally, the first target image is obtained by processing the first image and the third image, and the second target image is obtained by processing the first image and the third image.

**In still another possible implementation,** obtaining the target image by processing the first image, the second image, and the third image includes: performing linear correction and image processing on the first image, the second image, and the third image to obtain the target image, where the image processing includes one or more of bad pixel removal, white balance, image matting, image superimposition, image resizing, or the like.

In the foregoing implementation, there is an actual difference between images captured by a conventional outer view mirror and images captured by the left and right side cameras (for example, the first image and the second image captured by the left and right side cameras are distorted, or positions in the first image and the second image captured by the left and right side cameras may be offset relative to the conventional outer view mirror, and definition and accuracy of the images captured by the left and right side cameras are lower than those captured by the conventional outer view mirror. Therefore, the autonomous driving controller may perform image processing such as linear correction, bad pixel removal, and white balance and operations such as image matting, image superimposition, and image resizing on the first image and the second image from the left and right side cameras and the third image captured by the rear camera; and then send the image for display, to ensure that image quality is not affected by reusing the left and right side cameras.

Optionally, the left and right side cameras are left and right side cameras of an advanced driver assistance system (advanced driver assistance system, ADAS). The ADAS camera is a camera configured to capture sensing information required for intelligent driving, and is usually connected to the autonomous driving controller. An ADAS algorithm may be deployed in the autonomous driving controller, and the ADAS algorithm is used to make an intelligent driving decision based on the sensing information.

**In still another possible implementation,** sending the target image to the screen for display includes: when the first screen and a send-for-display system on chip (system on chip, SoC) of the autonomous driving controller are normal, send, by using the send-for-display SoC, the target image to the first screen for display; and when an exception occurs on the first screen or the send-for-display SoC of the autonomous driving controller, sending the target image to the second screen for display.

The first screen may be one or more screens. For example, the first screen may be two display screens located on the left and right sides of a cockpit of the intelligent driving terminal, and are referred to as the left screen and the right screen for ease of description. The two display screens are used to display field of view pictures of the rearview mirror angles.

In the foregoing implementation, the autonomous driving controller includes the send-for-display SoC. The send-for-display SoC may be connected to the first screen. After obtaining the target image, the send-for-display SoC sends the target image to the first screen for display. For example, the target image includes the first target image of a left rearview mirror angle, the first screen includes the left screen, and the autonomous driving controller sends, by using the send-for-display SoC, the first target image to the left screen for display.

In some solutions, if the send-for-display SoC or the first screen (for example, the left screen) is faulty or damaged, a field of view of a driver may be affected, thereby further affecting safety. When the first screen fails (for example, either of the left and right screens fails) or the send-for-display SoC of the autonomous driving controller fails, the target image is sent to and displayed on the second screen (for example, a central control screen), to ensure driving safety. In other words, the second screen may be considered as a standby screen for implementing the rearview function.

It may be understood that, as a core component of the autonomous vehicle, the autonomous driving controller is usually connected to a plurality of display screens. Therefore, the target image may be sent and displayed by using the autonomous driving controller.

**In still another possible implementation,** for example, the second screen is a central control screen, the autonomous driving controller further includes another SoC, and the SoC is configured to send the target image to the central control screen for display.

Optionally, when either of the left and right screens fails or the send-for-display SoC of the autonomous driving controller fails, the autonomous driving controller sends, by using the SoC, the target image to the central control screen for display. Further optionally, the SoC may use H.264 coding, H.265 coding, or another scheme for coding when sending the image to the central control screen for display.

**In still another possible implementation,** the autonomous driving controller may process information captured by a sensor to obtain warning information, and send the warning information to the screen for display.

**In still another possible implementation,** the target image may further include the warning information, and the warning information includes one or more of distance information, obstacle information, lane line information, traffic sign information, or the like.

In the foregoing implementation, the driver may learn an environment behind the field of view by using the warning information displayed on the screen, so that the driver can make a decision in a timely manner when an emergency occurs, thereby shortening a braking response time of the driver in the emergency, and improving driving safety and convenience.

**In still another possible implementation,** the information captured by the sensor includes the first image, the second image, and the third image; and obtaining the target image by processing the first image, the second image, and the third image includes: obtaining the target image based on the first image, the second image, the third image, and the warning information.

In the foregoing implementation, the first image, the second image, and the third image are real picture information, and the warning information is virtual information obtained based on the real images, for example, may be reflected on a real object in a form of a sign, a text, a line, or the like. The target image includes a real picture and warning information, so that the driver can learn a current driving environment more conveniently.

**In still another possible implementation,** the method further includes: when a preset case occurs in the intelligent driving terminal, adjusting a field of view corresponding to the target image from a first preset value to a second preset value, where the second preset value is greater than the first preset value.

Optionally, the preset case includes one or more of turning, lane change, determining a distance to a vehicle behind, or the like of the intelligent driving terminal.

In the foregoing implementation, the autonomous driving controller may sense an external environment by using devices such as the two side cameras on the sides of the intelligent driving terminal, the rear camera on the rear of the intelligent driving terminal, a lidar, and a GPS. For example, the autonomous driving controller determines that the intelligent driving terminal currently travels on a first road section and is to turn with a turning amplitude of 40°, and makes a decision to expand a field of view corresponding to a current target image based on a current situation. For example, a field of view angle of a target image that can be captured by the left camera and the right camera is generally 60°, the autonomous driving controller may adjust the field of view angle of the target image from 60° to 80°, that is, expand a field of view of the intelligent driving terminal in a turn.

**In still another possible implementation,** the method further includes: after the intelligent driving terminal exits the preset case, adjusting the field of view corresponding to the target image from the second preset value to the first preset value.

Still using an example in which a target situation is a turning scenario, after the turning ends, the autonomous driving controller may restore the target image to a normal field of view angle, to provide better driving experience for the driver.

**According to a second aspect,** this application provides an intelligent driving apparatus, where the intelligent driving apparatus includes modules or units configured to implement the method described in any one of the first aspect or the possible implementations of the first aspect. The module may be a software module or a hardware module.

**According to a third aspect,** this application provides an intelligent driving terminal. The intelligent driving terminal includes an autonomous driving controller, two side cameras on a side of the intelligent driving terminal, a rear camera on the rear of the intelligent driving terminal, and a screen, the two side cameras and the rear camera are configured to capture a driving scene image, the screen is configured to display a target image, and the autonomous driving controller is configured to process the driving scene image, to control the intelligent driving terminal to implement the method described in any one of the first aspect or the possible implementations of the first aspect.

In a possible implementation, the intelligent driving terminal is a vehicle, an uncrewed aerial vehicle, or a robot.

**According to a fourth aspect,** this application provides a chip, where the chip includes a logic circuit and an interface. The logic circuit is coupled to the interface. The interface is configured to input and/or output information. The logic circuit is configured to perform the method described in any one of the first aspect or the possible implementations of the first aspect.

**According to a fifth aspect,** this application provides a computer-readable storage medium, where the computer-readable storage medium stores instructions. When the instructions are run on at least one processor, the method described in any one of the first aspect or the possible implementations of the first aspect may be implemented.

**According to a sixth aspect,** this application provides a computer program product, where the computer program product includes computer instructions. When the instructions are run on at least one processor, the method described in any one of the first aspect or the possible implementations of the first aspect may be implemented. The computer program product may be a software installation package. When the foregoing method needs to be used, the computer program product may be downloaded and executed on a computing device.

For beneficial effect of the technical solutions provided in the second to sixth aspects of this application, refer to beneficial effect of the technical solution in the first aspect. Details are not described herein again.

### BRIEF DESCRIPTION OF DRAWINGS

The following briefly describes accompanying drawings used in descriptions of embodiments.
FIG. 1 is a diagram of an architecture of an autonomous vehicle according to an embodiment of this application;
FIG. 2 is a diagram of deployment locations of cameras according to an embodiment of this application;
FIG. 3 is a diagram of a new architecture of an autonomous vehicle according to an embodiment of this application;
FIG. 4 is a schematic flowchart of an intelligent driving method according to an embodiment of this application;
FIG. 5 is a diagram of a scenario involving an intelligent driving terminal in a driving process according to an embodiment of this application;
FIG. 6 is a diagram of a target image processing process according to an embodiment of this application;
FIG. 7 is a diagram of screen display in a driving cockpit according to an embodiment of this application;
FIG. 8 is a diagram of a target image according to an embodiment of this application;
FIG. 9 is a diagram of a structure of an intelligent driving apparatus 90 according to an embodiment of this application; and
FIG. 10 is a diagram of an architecture of an electronic device 100 according to an embodiment of this application.

### DESCRIPTION OF EMBODIMENTS

This application provides an intelligent driving method and a related apparatus, to reduce costs and beautify a vehicle body shape by replacing a conventional rearview mirror with an electronic rearview mirror. The method provided in this application may be applied to an intelligent driving terminal. The intelligent driving terminal may be a mobile phone, a personal notebook computer, an intelligent robot, an intelligent driving device, or the like. The intelligent driving device may include a road vehicle, a water vehicle, an air vehicle, an industrial device, an agricultural device, an entertainment device, or the like. For example, the intelligent driving device may be a vehicle. The vehicle is a vehicle in a broad sense, and may be a transportation tool (for example, a commercial vehicle, a passenger vehicle, a motorcycle, an airborne vehicle, or a train), an industrial vehicle (for example, a forklift truck, a trailer, or a tractor), an engineering vehicle (for example, an excavator, a bulldozer, or a crane), an agricultural device (for example, a lawn mower or a harvester), a recreational device, a toy vehicle, or the like. A type of the vehicle is not specifically limited in embodiments of this application. For another example, the intelligent driving terminal may be a transportation means like an airplane or a ship.

The following describes an architecture of embodiments of this application with reference to the accompanying drawings in embodiments of this application by using an example in which the intelligent driving terminal is an autonomous vehicle.

For ease of understanding, the following first describes related terms that may be used in embodiments of this application.

### 1. Intelligent driving

Intelligent driving is an important direction of intelligent development of vehicles. With the development of sensing technologies and improvement of chip capabilities, intelligent driving provides increasingly diverse driving functions for people, and gradually implements driving experience of different levels. The society of automotive engineers (society of automotive engineers, SAE) provides a driving automation level standard, including driving levels L0 to L5. The level L0 is no automation. A human driver is fully responsible for operating a vehicle. In a traveling process, a warning or assistance may be obtained from a driving system, for example, autonomous emergency braking (autonomous emergency braking, AEB), blind spot monitoring (blind spot monitoring, BSM), or lane departure warning (lane departure warning, LDW). The level L1 is driving support. A driving operation is jointly performed by a human driver and a driving system, the driving system may provide driving support for a steering wheel or a speeding up or speeding down operation based on a driving environment, and another driving operation is performed by the human driver, for example, adaptive cruise control (adaptive cruise control, ACC) or lane keep assistance/support (lane keep assistance/support, LKA/LKS). The level L2 is partial automation. Driving support is provided for a plurality of operations related to a steering wheel and speeding up or speeding down based on a driving environment, and another driving action is performed by a human driver, for example, a vehicle following function that combines adaptive cruise control (adaptive cruise control, ACC) and lane keep assistance (lane keep assistance, LKA). The level L3 is conditional automation. A driving system may complete some driving operations. However, a human driver needs to respond to a request of the driving system at an appropriate time, that is, the human driver needs to be ready to take over the driving system. The level L4 is high automation. A driving system may complete all driving operations, and a human driver does not necessarily need to respond to a request of the driving system. For example, when road and environment conditions permit (for example, a closed campus, a highway, an urban road, or a routine driving path), the human driver may not take over driving. The level L5 is full automation. A driving system may independently complete driving operations under various road and environment conditions that can be handled by a human driver. It can be learned that, at the levels L0 to L2, the driving system mainly provides support for the driver, and the driver still needs to perform driving supervision, and perform steering, braking, or acceleration as required, to ensure safety. At the levels L3 to L5, the driving system can replace the driver to complete all the driving operations. At the level L3, the driver needs to be ready to take over driving. At the levels L4 and L5, the driving system can implement fully autonomous driving under some or all conditions. The driver may choose whether to take over driving.

The foregoing levels are an example. With technology evolution or different regulations in different countries or regions, the foregoing levels may change. For example, the vehicle automation levels proposed by the Ministry of Industry and Information Technology of China includes six levels of vehicle driving automation, where levels 0 to 2 are driver assistance, a system assists a human in performing a dynamic driving task, and a driving subject is still a driver; and levels 3 to 5 are intelligent driving, a system performs a dynamic driving task in place of a human in an operational design condition, and a driving subject is the system when a function is activated. Names and definitions of the levels are as follows: A level-0 driving automation (emergency assistance, emergency assistance) system cannot continuously perform horizontal or vertical motion control on a vehicle in a dynamic driving task, but has a capability of continuously detecting and responding to some targets and events in the dynamic driving task. A level-1 driving automation (partial driver assistance, partial driver assistance) system continuously performs horizontal or vertical motion control on a vehicle in a dynamic driving task under an operational design condition (or referred to as an operational design domain ODD) of the system, and has a capability of detecting and responding to some targets and events that adapt to the horizontal or vertical motion control performed on the vehicle. A level-2 driving automation (combined driver assistance, combined driver assistance) system continuously performs horizontal and vertical motion control on a vehicle in a dynamic driving task under an operational design condition of the system, and has a capability of detecting and responding to some targets and events that adapt to the horizontal and vertical motion control performed on the vehicle. A level-3 driving automation (conditionally automated driving, conditionally automated driving) system continuously executes all dynamic driving tasks under an operational design condition. A level-4 driving automation (highly automated driving, highly automated driving) system continuously executes all dynamic driving tasks and automatically performs a minimum risk strategy under an operational design condition of the system. A level-5 driving automation (fully automated driving, fully automated driving) system continuously executes all dynamic driving tasks and automatically performs a minimum risk strategy under any traveling condition. The horizontal control is mainly used for vehicle steering control, for example, controlling torque or an angle of a steering wheel to control a direction of the vehicle. The vertical control is mainly used for vehicle speed control, for example, controlling a braking pedal, an acceleration pedal, or a gear to control acceleration/deceleration, braking, or the like of the vehicle.

Regardless of a level classification manner, descriptions in embodiments of this application may be applicable to the foregoing intelligent driving system that needs to partially or completely participate in vehicle driving.

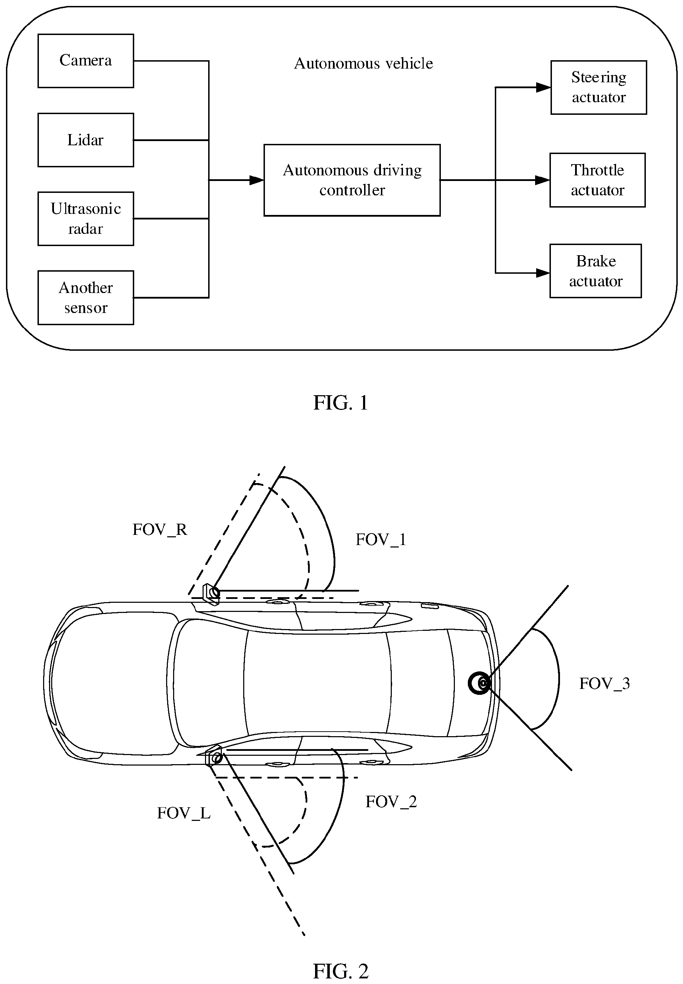

FIG. 1 is a diagram of an architecture of an autonomous vehicle according to an embodiment of this application. The autonomous vehicle includes a sensor, a controller, and an actuator. As shown in FIG. 1, the sensor may include one or more of a camera, a lidar, an ultrasonic radar, or the like. The controller is configured to perform processing and calculation, for example, may be a domain controller (an autonomous driving controller shown in FIG. 1). In some solutions, the controller may run an algorithm to perform processes such as data processing and logical calculation. The actuator is configured to perform a control function on a vehicle or a component in a vehicle, including executing a control decision made by the controller, responding to a control decision made by a user, or the like. For example, the actuator may include one or more of a steering actuator, a throttle actuator, a brake actuator, or the like. Further, the autonomous vehicle further includes an electronic rearview mirror. With emergence of more configurations, the electronic rearview mirror is increasingly deployed on the autonomous vehicle due to practicability of the electronic rearview mirror.

Compared with a conventional optical rearview mirror, the electronic rearview mirror is more expensive and more likely to be equipped with a high-end model. Once the electronic rearview mirror is damaged, time and money costs of maintenance are much greater than those of the conventional optical rearview mirror. In addition, the electronic rearview mirror depends on a normal operation of technical devices such as a camera and a display. If these devices are faulty or damaged, a field of view of a driver may be affected, thereby further affecting safety. Further, camera capturing and information processing require time, which may have a delay to some extent compared with a scenario involving the conventional optical rearview mirror. In addition, because the electronic rearview mirror is installed, a camera of the electronic rearview mirror may overlap a camera on the autonomous vehicle, which causes redundancy in a design of a vehicle body shape and increases costs. To resolve the foregoing problem, embodiments of this application provide a new architecture based on the foregoing architecture. The autonomous driving controller, two side cameras located on sides of the autonomous vehicle, and a rear camera located on the rear of the autonomous vehicle are reused to capture and process an image in a driving process. In this way, there is no need for configurations such as left and right cameras and a controller of the electronic rearview mirror. In addition, a new intelligent driving method is provided based on the new architecture, to reduce costs and improve a vehicle body shape while still implementing a function of the electronic rearview mirror.

FIG. 2 is a diagram of deployment locations of cameras according to an embodiment of this application. As shown in FIG. 2, an autonomous vehicle includes two side cameras located on sides of the autonomous vehicle and a rear camera located on the rear of the autonomous vehicle. The two side cameras on the sides of the autonomous vehicle may be respectively deployed above a left front wheel and a right front wheel of the autonomous vehicle. A field of view (for example, represented as FOV_2) captured by a left side camera replaces a field of view (for example, represented as FOV_L) captured by a left camera of an electronic rearview mirror. A field of view (for example, represented as FOV_1) captured by a right side camera replaces a field of view (for example, represented as FOV_R) captured by a right camera of the electronic rearview mirror. A field of view captured by the rear camera may be represented as FOV_3. An autonomous driving controller processes images corresponding to FOV_1, FOV_2, and FOV_3, and sends an image obtained through processing to a screen for display.

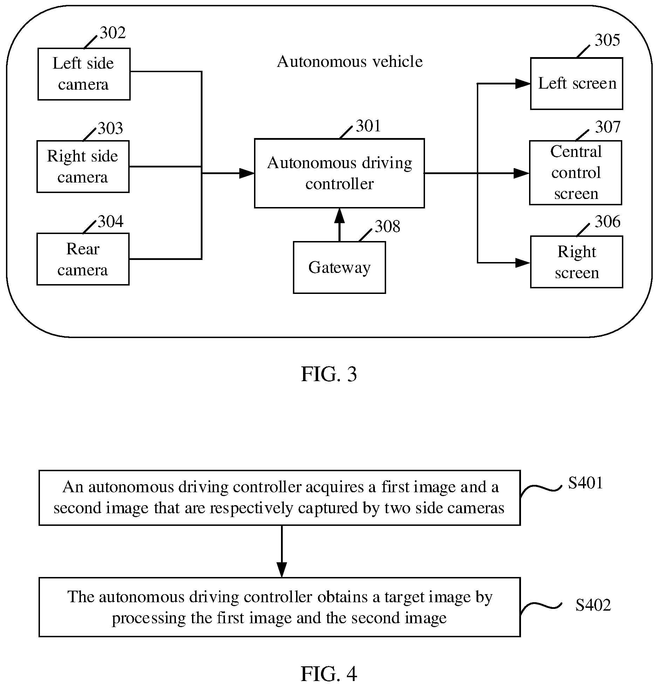

FIG. 3 is a diagram of a new architecture of an autonomous vehicle according to an embodiment of this application. As shown in FIG. 3, the autonomous vehicle includes an autonomous driving controller 301, two side cameras (a left side camera 302 and a right side camera 303) on sides of the autonomous vehicle, a rear camera 304 on the rear of the autonomous vehicle, screens (a left screen 305, a right screen 306, and a central control screen 307), and a gateway 308. The left side camera 302, the right side camera 303, and the rear camera 304 are configured to capture an image of a driving scenario. The autonomous driving controller 301 is configured to process the image of the driving scenario. The left screen 305 and the right screen 306, or the central control screen 307 is configured to display an image (for example, represented as a target image), obtained through processing, of the driving scenario. The gateway 308 may be used for wide area network interconnection and local area network interconnection.

The following describes the intelligent driving method provided in embodiments of this application.

FIG. 4 is a schematic flowchart of an intelligent driving method according to an embodiment of this application. Optionally, the intelligent driving method may be applied to the architectures shown in FIG. 2 and FIG. 3.

The intelligent driving method includes but is not limited to one or more of step S401 and step S402 shown below. It should be understood that, for ease of description, a sequence between S401 and S402 is used for description herein, but this is not intended to constitute a limitation that the method is necessarily performed in the foregoing sequence. An execution sequence, an execution time, a quantity of execution times, and the like of the foregoing one or more steps are not limited in this embodiment of this application. Another step may be alternatively interpolated between, before or after these steps as required.

**Step S401:** An autonomous driving controller acquires a first image and a second image that are respectively captured by two side cameras.

For example, the two side cameras are respectively cameras located on a left side and a right side of an intelligent driving terminal.

The intelligent driving terminal may be an apparatus having a computing capability. For example, the intelligent driving terminal may be the autonomous vehicle shown in FIG. 3. Optionally, the intelligent driving terminal may be a single device, or may be a distributed system including a plurality of devices.

Optionally, the left side camera is an ADAS left side camera, and the right side camera is an ADAS right side camera. The ADAS camera is a camera configured to capture sensing information required for autonomous driving, and is usually connected to the autonomous driving controller. An ADAS algorithm may be deployed in the autonomous driving controller, and the ADAS algorithm is used to make an intelligent driving decision based on the sensing information captured by a sensor.

**In a possible implementation,** the autonomous driving controller may further acquire a third image captured by a rear camera.

For example, the rear camera is a camera located on the rear of the intelligent driving terminal.

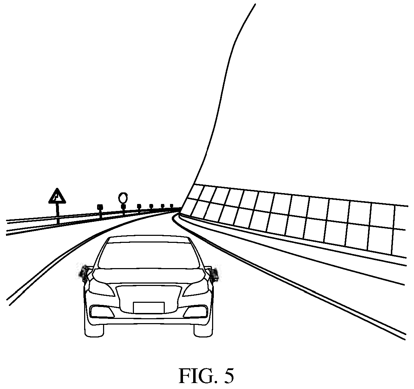

An example in which the autonomous driving controller acquires the first image, the second image, and the third image is used. FIG. 5 is a diagram of a scenario involving an intelligent driving terminal in a driving process according to an embodiment of this application. As shown in FIG. 5, in a current scenario in which the intelligent driving terminal drives on a road, the first image is data that is captured by the left side camera and that is associated with a left-side field of view picture of the intelligent driving terminal in the current driving scenario, the second image is data that is captured by the right side camera and that is associated with a right-side field of view picture of the intelligent driving terminal in the current driving scenario, and the third image is data that is captured by the rear camera and that is associated with a rear field of view picture of the intelligent driving terminal in the current driving scenario. In some embodiments, the three cameras actively send the captured first image, second image, and third image to the autonomous driving controller when the intelligent driving terminal is driving. The first image, the second image, and the third image may carry location information (for example, a current location) and time information (for example, a timestamp).

In some other embodiments, the autonomous driving controller may actively acquire the first image, the second image, and the third image that are captured by the three cameras when the intelligent driving terminal is driving.

**Step S402:** The autonomous driving controller obtains a target image by processing the first image and the second image.

The target image indicates a field of view picture of a rearview mirror angle for the intelligent driving terminal. In this case, a driver of the intelligent driving terminal or another apparatus (for example, the autonomous driving controller and another component) in the intelligent driving terminal may determine, based on the target image, various situations that may affect driving in the rear field of view picture, and make a driving decision. In other words, the target image may be used for intelligent driving.

For example, the two side cameras can capture left-side and right-side field of view pictures of the intelligent driving terminal, and the target image obtained by the autonomous driving controller by processing the first image and the second image is a complete field of view picture of the rearview mirror angle obtained through fusion of the left-side and right-side field of view pictures. The field of view picture of the rearview mirror angle is all fields of view that can be seen by the driver on sides of the intelligent driving terminal.

**In a possible implementation,** the autonomous driving controller may obtain the target image by processing the first image, the second image, and the third image.

For example, the two side cameras can capture the left-side and right-side field of view pictures of the intelligent driving terminal, and the rear camera can capture a rear-side field of view picture of the intelligent driving terminal. The target image obtained by the autonomous driving controller by processing the first image, the second image, and the third image is a complete field of view picture of the rearview mirror angle obtained through fusion of the left-side and right-side field of view pictures and the rear-side field of view picture. The field of view picture of the rearview mirror angle is all fields of view that can be seen by the driver on the sides and the rear of the intelligent driving terminal.

**To better reflect integrity of the solution, the following uses an example in which the first image, the second image, and the third image are used for processing for description.**

In a possible implementation, the autonomous driving controller obtains the target image by performing linear correction and image processing on the first image, the second image, and the third image. The image processing includes one or more of bad pixel removal, white balance, image matting, image superimposition, image resizing, or the like.

**In a possible scenario, the target image may be an image. For example, one image can reflect a field of view environment of the left side, the right side, and the rear of the vehicle.**

**In some possible scenarios, the target image may include a plurality of images, and the plurality of images may be respectively used to represent field of view pictures of rearview mirrors in a plurality of directions.**

For example, the target image includes a first target image and a second target image, the first target image and the second target image respectively indicate field of view pictures of rearview mirror angles on the two sides of the intelligent driving terminal. In this case, the driver of the intelligent driving terminal or another apparatus (for example, the autonomous driving controller and another component) in the intelligent driving terminal may separately determine, based on the first target image and the second target image, various situations that may affect driving in the rear field of view picture, and make a driving decision. In other words, the first target image and the second target image are used for intelligent driving.

The following uses an example in which the target image includes the first target image and the second target image to describe a process of obtaining the target image. In a possible implementation, the autonomous driving controller obtains the first target image by processing the first image and the third image, and obtains the second target image by processing the first image and the third image.

For example, the first target image obtained by the autonomous driving controller by processing the first image and the third image is a field of view picture of the rearview mirror angle obtained through fusion of the left-side field of view picture (corresponding to the first image) and the rear-side field of view picture (corresponding to the third image), and the second target image obtained by the autonomous driving controller by processing the second image and the third image is a field of view picture of the rearview mirror angle obtained through fusion of the right-side field of view picture (corresponding to the second image) and the rear-side field of view picture (corresponding to the third image).

**In a possible implementation,** the autonomous driving controller obtains the first target image by performing linear correction and image processing on the first image and the third image, and obtains the second target image by performing linear correction and image processing on the first image and the third image.

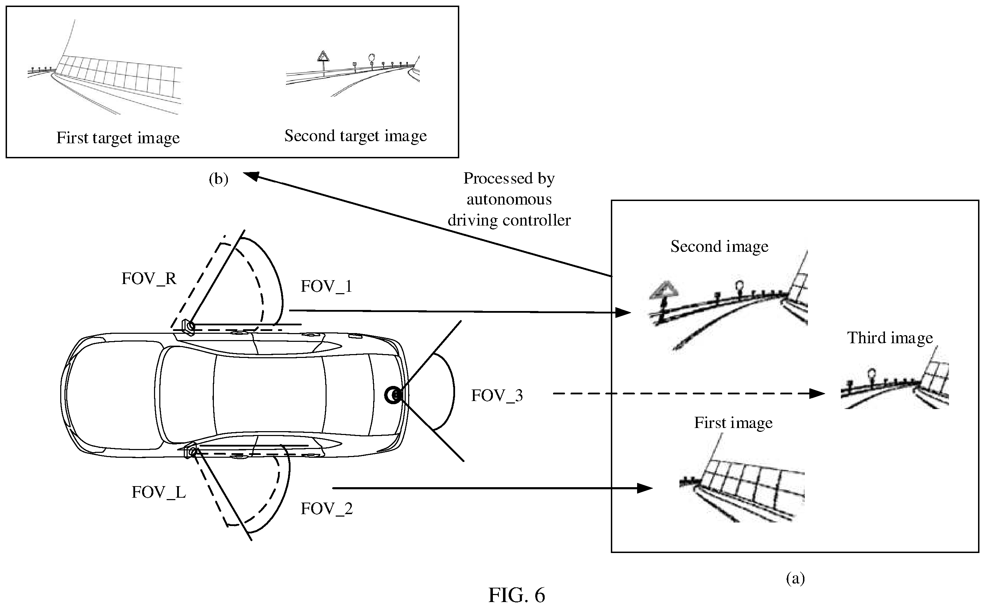

For example, the following provides an example with reference to the scenario in FIG. 5. For example, the intelligent driving terminal is currently turning left on a road, the left side camera photographs a blind-zone view, the right side camera photographs a field of view picture of turning, and the rear camera photographs a field of view picture of a tail of the intelligent driving terminal. FIG. 6 is a diagram of a target image processing process according to an embodiment of this application. As shown in FIG. 6, (a) in FIG. 6 illustrates the first image captured by the left side camera, the second image captured by the right side camera, and the third image captured by the rear camera. The autonomous driving controller processes the first image, the second image, and the third image to obtain the first target image and the second target image that are shown in (b) in FIG. 6. There is an actual difference between images captured by a conventional outer view mirror and the images captured by the left and right side cameras (for example, the first image and the second image captured by the left and right side cameras are distorted, or positions in the first image and the second image captured by the left and right side cameras may be offset relative to the conventional outer view mirror, and definition and accuracy of the images captured by the left and the right side cameras are lower than those captured by the conventional outer view mirror. Therefore, the autonomous driving controller may perform image processing such as linear correction, bad pixel removal, and white balance and operations such as image matting, image superimposition, and image resizing on the first image and the second image from the left and right side cameras and the third image captured by the rear camera; and then send the target image for display, to ensure that image quality is not affected by reusing the left and right side cameras.

**In some possible cases, the intelligent driving terminal further includes a screen. For example, the screen of the intelligent driving terminal includes but is not limited to one or more of a left screen, a right screen, a large central control screen, a front passenger entertainment screen, or the like. The left screen and the right screen may be respectively deployed at locations that are on a left side and a right side of the intelligent driving terminal and that are close to a vehicle window. After obtaining the target image, the autonomous driving controller may send the target image to the screen for display.** Specifically, the autonomous driving controller sends the target image to the screen, and the screen displays the target image.

In some solutions, the intelligent driving terminal includes a first screen. The first screen may be one or more screens. For example, the first screen may be two display screens located on the left and right sides of a cockpit of the intelligent driving terminal, and are referred to as the left screen and the right screen for ease of description. The two display screens are used to display field of view pictures of the rearview mirror angles. Alternatively, the first screen may be either of the left screen and the right screen.

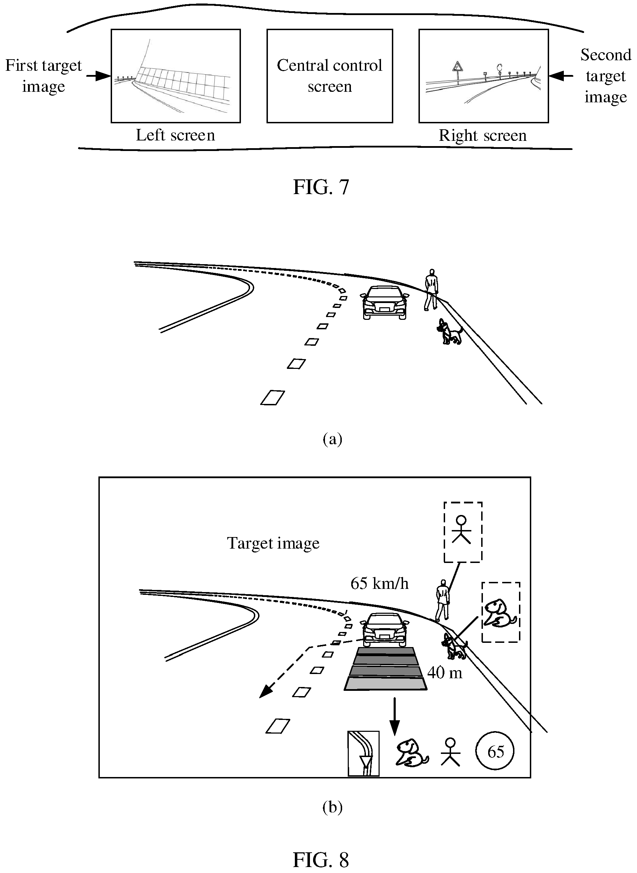

For example, it is assumed that the target image includes the first target image and the second target image, where the first target image is a field of view picture of the rearview mirror angle obtained through fusion of the left-side field of view picture (corresponding to the first image) and the rear-side field of view picture (corresponding to the third image), and the second target image is a field of view picture of the rearview mirror angle obtained through fusion of the right-side field of view picture (corresponding to the second image) and the rear-side field of view picture (corresponding to the third image). In this case, the left screen is used to display the first target image, and the right screen is used to display the second target image. For example, refer to FIG. 7. FIG. 7 is a diagram of screen display in a driving cockpit according to an embodiment of this application. As shown in FIG. 7, the left screen is responsible for displaying the field of view picture of the rearview mirror angle (that is, displaying the first target image) obtained through fusion of the first image and the third image, and the right screen is responsible for displaying the field of view picture of the rearview mirror angle (that is, displaying the second target image) obtained through fusion of the second image and the third image.

**In some possible cases, the autonomous driving controller further includes a send-for-display SoC. It may be understood that, as a core component of the autonomous vehicle, the autonomous driving controller is usually connected to a plurality of display screens.** For example, the send-for-display SoC may be connected to the first screen. Therefore, the target image may be sent and displayed by using the autonomous driving controller.

Optionally, the two side cameras and the rear camera serialize the first image, the second image, and the third image by using a serializer and transmit them to the autonomous driving controller for deserialization, and then the deserialized images are input to the send-for-display SoC inside the autonomous driving controller. The images are processed by an image signal processor (image signal processor, ISP) module inside the send-for-display SoC and then serialized through a display serial interface (display serial interface, DSI) for transmission, thereby implementing sending and displaying of the target image.

In some solutions, when the first screen and the send-for-display SoC of the autonomous driving controller are normal, after the target image is obtained, the send-for-display SoC sends the target image to the first screen for display.

**In some possible cases, the intelligent driving terminal includes the first screen and a second screen. When the first screen fails (for example, either of the left and right screens fails) or the send-for-display SoC of the autonomous driving controller fails, the target image is sent to and displayed on the second screen (for example, the central control screen), to ensure driving safety.** In other words, the second screen may be considered as a standby screen for implementing a rearview function.

If the send-for-display SoC or the first screen (for example, the left screen) is faulty or damaged, a field of view of the driver may be affected, thereby further affecting safety. However, because the autonomous driving controller may be connected to the first screen and the second screen, when the first screen is faulty, the target image may be sent to the standby screen for display, thereby improving driving safety.

The following uses an example in which the second screen is a central control screen and the target image includes the first target image and the second target image to describe four standby sending and displaying cases.

**Case 1:** When the left screen of the first screen fails, the first target image is sent to and displayed on the central control screen, and the second target image is still displayed through the right screen of the first screen.

**Case 2:** When the right screen of the first screen fails, the second target image is sent to and displayed on the central control screen, and the first target image is still displayed through the left screen of the first screen.

**Case 3:** When both the left screen and the right screen of the first screen fail, the first target image and the second target image are sent to and displayed on the second screen.

**Case 4:** When the send-for-display SoC of the autonomous driving controller fails, the first target image and the second target image are sent to the central control screen for display by using another SoC (for example, referred to as a standby SoC) included in the autonomous driving controller.

Optionally, when either of the left and right screens fails or the send-for-display SoC of the autonomous driving controller fails, the standby SoC that sends the target image to the central control screen for display may use H.264 coding, H.265 coding, or another scheme for coding. For example, H.264 can implement transmission of a standard-definition digital image at a speed lower than 1 Mbps; and H.265 coding can implement transmission of 720P (1280*720 resolution) common high-definition audio and video at a speed of 1 Mbps to 2 Mbps.

**In some possible cases, the autonomous driving controller may further process information captured by a sensor to obtain warning information, and send the warning information to the screen for display.** There may be one or more sensors. When there are a plurality of sensors, types of the plurality of sensors may be different, for example, including but not limited to devices such as a millimeter-wave radar, a camera, a lidar, and a GPS. In this case, the target image displayed on the screen may further include the warning information.

Further, the warning information includes one or more of distance information, obstacle information, lane line information, traffic sign information, or the like.

The distance information is, for example, a distance between the vehicle and another vehicle, a distance between the vehicle and a road edge (or a lane line), or a distance between the vehicle and an obstacle. An obstacle is an entity, for example, an object, a terrain, or a facility, that may delay or hinder movement of the intelligent driving terminal in a moving process of the intelligent driving terminal. The object may include a living object or an inanimate object. In addition, a location of the obstacle may be fixed or moving. The obstacle information includes one or more of an obstacle type, an obstacle location, a distance between the obstacle and the vehicle, or the like, for example, an obstacle such as a human, an animal, a bicycle, an electric vehicle, a road bulge, or a hole, or even a special-shaped obstacle. The lane line information may include information such as a location of a lane line and a distance between the vehicle and the lane line. The traffic sign information may include information such as content and a location of a traffic sign.

Optionally, the warning information may alternatively be generated based on the first image, the second image, and the third image. Specifically, the autonomous driving controller may further obtain the warning information based on the first image, the second image, and the third image, and obtain the target image based on the first image, the second image, the third image, and the warning information.

For example, the first image, the second image, and the third image are real picture information, and the warning information is virtual information obtained based on the real images, for example, may be reflected on a real object in a form of a sign, a text, a line, or the like. The target image includes a real picture and the warning information, so that the driver can learn a current driving environment more conveniently. The driving environment may include a traffic light, a lane line, a traffic sign, an animal, a plant, a vehicle, a crosswalk, or a pedestrian.

For example, refer to FIG. 8. FIG. 8 is a diagram of a target image according to an embodiment of this application. As shown in FIG. 8, (a) in FIG. 8 illustrates a scenario in which the intelligent driving terminal currently travels on a road, and (b) in FIG. 8 illustrates a target image captured by the sensor.

For example, the autonomous driving controller may obtain a location of a lane line by processing images from the side cameras and the rear camera, and indicate the location of the lane line in the target image. As shown in (b) in FIG. 8, a solid line arrow is used in the target image to indicate the location of the lane line.

For example, the autonomous driving controller may obtain the distance information by processing the images from the side cameras and the rear camera and GPS positioning data. Still refer to (b) in FIG. 8. A dashed line arrow is used in the target image to indicate a possible moving trajectory of a rear vehicle, which currently drives at a speed of 65 km/h as indicated, to prompt the driver to pay attention to determining a distance to the rear vehicle and ensure driving safely.

For example, the autonomous driving controller may obtain the distance information by processing the images from the side cameras and the rear camera and point cloud data of the lidar. Still refer to (b) in FIG. 8. For example, the distance information is a distance between the vehicle and another vehicle. A distance that is between the vehicle and a rear vehicle and that is obtained by the autonomous driving controller through image processing is 40 m, and the distance is indicated on the target image.

For example, the autonomous driving controller may obtain a type and a location of an obstacle by processing the images from the side cameras and the rear camera and the point cloud data of the lidar, and indicate the type and the location of the obstacle in the target image. Still refer to (b) in FIG. 8. For example, the obstacle is a pedestrian and a dog on the right rear side of the intelligent driving terminal. Information, that there is a pedestrian and a dog on the right rear side of the intelligent driving terminal, obtained by the autonomous driving controller through image processing is indicated in the target image by using a dog identifier and a pedestrian identifier, to prompt the driver to note that an obstacle exists around the current environment of the intelligent driving terminal and the driver needs to drive with caution.

**In some scenarios, the intelligent driving terminal may encounter a plurality of driving situations (for example, the following preset case) in the driving process. For example, the preset case includes but is not limited to one or more of turning, lane change, and determining a distance to a vehicle behind, or the like of the intelligent driving terminal.** Generally, different preset cases correspond to different rear-view field of views.

**In a possible implementation,** the autonomous driving controller adjusts a size of the target image from a first preset value to a second preset value when the preset case occurs in the intelligent driving terminal. Further, the second preset value is greater than the first preset value. For example, the autonomous driving controller may sense an external environment by using devices such as the two side cameras on the sides of the intelligent driving terminal, the rear camera on the rear of the intelligent driving terminal, the lidar, and the GPS. For example, the autonomous driving controller determines that the intelligent driving terminal currently travels on a first road section and is to turn with a turning amplitude of 40°, and makes a decision to expand a field of view corresponding to a current target image based on a current situation. For example, a field of view angle of a target image that can be captured by the left camera and the right camera is generally 60°, the autonomous driving controller may adjust the field of view angle of the target image from 60° to 80°, that is, expand a field of view of the intelligent driving terminal in a turn.

Optionally, after the intelligent driving terminal exits the preset case, the autonomous driving controller adjusts the size of the target image from the second preset value to the first preset value. Further, after the turning ends, the autonomous driving controller may restore the target image to a normal field of view angle, to provide better driving experience for the driver. Optionally, the second preset value is less than the first preset value.

For example, the autonomous driving controller may alternatively narrow down a field of view of the target image based on an actual situation when the intelligent driving terminal turns. For example, the field of view angle of the target image that can be captured by the left camera and the right camera is generally 60°, the autonomous driving controller may adjust the field of view angle of the target image from 60° to 40°, to make a visible area clearer. After the turning ends, the field of view angle is also returned to a normal value, to provide better driving experience for the driver.

For example, the intelligent driving terminal currently travels on a second road section of the road and is to make a lane change. The autonomous driving controller may sense an external environment by using devices such as the two side cameras located on the sides of the intelligent driving terminal, the rear camera located on the rear of the intelligent driving terminal, the lidar, and the GPS, and adaptively make a decision to expand or narrow down a field of view corresponding to a current target image based on a current situation. After the lane change ends, the field of view angle is returned to a normal value, to provide better driving experience for the driver.

In this application, an image in the driving process is captured by using the two side cameras and the rear camera. This eliminates the need to redeploy left and right cameras in an electronic rearview mirror system, or even install an optical rearview mirror, thereby improving a vehicle body shape. In addition, in this application, the autonomous driving controller is reused to process the captured image, implementing a function of an electronic rearview mirror, and therefore reducing costs of the entire vehicle. In conclusion, this application can greatly reduce costs and improve the vehicle body shape while implementing the rearview function.

In addition, with high-performance sensing and computing capabilities of the autonomous driving controller, a user can be provided with richer experience, and driving safety can be improved.

The foregoing describes in detail the method in embodiments of this application. The following provides apparatuses in embodiments of this application.

It may be understood that, to implement the functions in the foregoing method embodiment, a plurality of apparatuses provided in this embodiment of this application, for example, intelligent driving apparatuses, include a corresponding hardware structure, software module, or a combination of a hardware structure and a software structure for performing the functions.

A person skilled in the art should easily be aware that, in combination with units and algorithm steps of the examples described in embodiments disclosed in this specification, this application may be implemented by hardware or a combination of hardware and computer software. Whether a function is performed by hardware or hardware driven by computer software depends on particular applications and design constraints of the technical solutions. A person skilled in the art may implement the foregoing method embodiments by using different apparatus implementations in different use scenarios. It should not be considered that different implementations of the apparatus go beyond the scope of embodiments of this application.

In embodiments of this application, the apparatus may be divided into functional modules. For example, functional modules may be obtained through division in correspondence to functions, or two or more functions may be integrated into one functional module. The integrated module may be implemented in a form of hardware, or may be implemented in a form of a software functional module. It should be noted that, in embodiments of this application, division into the modules is an example and is merely logical function division, and there may be other division in an actual implementation.

For example, when the functional modules of the apparatus are divided in an integrated manner, several possible intelligent driving apparatuses are listed in this application.

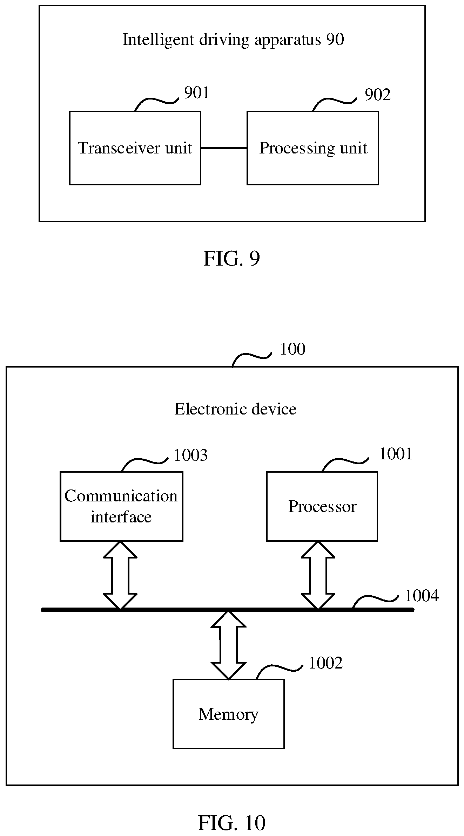

FIG. 9 is a diagram of a structure of an intelligent driving apparatus 90 according to an embodiment of this application. The intelligent driving apparatus 90 may be an autonomous driving controller or a component in the autonomous driving controller, for example, a chip, a software module, or an integrated circuit. The intelligent driving apparatus 90 has a function of implementing the electronic device described in embodiments of this application. In a possible design, the intelligent driving apparatus 90 includes a transceiver unit 901 and a processing unit 902.

The transceiver unit 901 is configured to acquire a first image and a second image that are respectively captured by two side cameras located on sides of an intelligent driving terminal.

The processing unit 902 is configured to obtain a target image by processing the first image and the second image, where the target image indicates a field of view picture of a rearview mirror angle for the intelligent driving terminal, and the target image is used for intelligent driving.

In an optional implementation, in obtaining the target image by processing the first image and the second image, the processing unit 902 is specifically configured to: acquire a third image captured by the rear camera; and obtain the target image by processing the first image, the second image, and the third image.

In another optional implementation, the intelligent driving terminal further includes a screen, and the transceiver unit 901 is further configured to send the target image to the screen for display.

In still another optional implementation, the screen includes a first screen and a second screen, and the first screen includes a left screen and/or a right screen; and the target image includes a first target image and a second target image, the first target image and the second target image respectively indicate field of view pictures of rearview mirror angles on the two sides of the intelligent driving terminal, the left screen is used to display the first target image, and the right screen is used to display the second target image.

In still another optional implementation, in obtaining the target image by processing the first image, the second image, and the third image, the processing unit 902 is specifically configured to:
perform linear correction and image processing on the first image, the second image, and the third image to obtain the target image, where the image processing includes one or more of bad pixel removal, white balance, image matting, image superimposition, image resizing, or the like.

In still another optional implementation, in sending the target image to the screen for display, the transceiver unit 901 is specifically configured to:
when the first screen and a send-for-display system on chip SoC of the autonomous driving controller are normal, send, by using the send-for-display SoC, the target image to the first screen for display; and when an exception occurs on the first screen or the send-for-display SoC of the autonomous driving controller, send the target image to the second screen for display.

In still another optional implementation, the target image further includes warning information. The processing unit 902 is further configured to process information captured by a sensor to obtain the warning information.

In still another optional implementation, the warning information includes one or more of distance information, obstacle information, lane line information, traffic sign information, or the like.

In still another optional implementation, the information captured by the sensor includes the first image, the second image, and the third image; and in obtaining the target image by processing the first image, the second image, and the third image, the processing unit 902 is specifically configured to:
obtain the target image based on the first image, the second image, the third image, and the warning information.

In still another optional implementation, the processing unit 902 is further configured to: when a preset case occurs in the intelligent driving terminal, adjust a field of view corresponding to the target image from a first preset value to a second preset value, where the second preset value is greater than the first preset value; and after the intelligent driving terminal exits the preset case, adjust the field of view corresponding to the target image from the second preset value to the first preset value.

In still another optional implementation, the preset case includes one or more of turning, lane change, determining a distance to a vehicle behind, or the like of the intelligent driving terminal.

This embodiment of this application and the foregoing method embodiment are based on a same concept, and bring same technical effects. For a specific principle, refer to the descriptions of the foregoing embodiments. Details are not described again.

FIG. 10 is a diagram of an architecture of an electronic device 100 according to an embodiment of this application. As shown in FIG. 10, the electronic device 100 may be an autonomous driving controller deployed in an intelligent driving terminal, a cloud server deployed in a cloud, or a local device. The electronic device 100 may be a single device, or may be a distributed system including a plurality of devices. The electronic device 100 may include a processor 1001, and optionally, may further include at least one memory 1002. Further, optionally, the electronic device 100 may further include a communication interface 1003. Further optionally, a bus 1004 may be included. The processor 1001, the memory 1002, and the communication interface 1003 are connected by using the bus 1004.

The processor 1001 is a module for performing an arithmetic operation and/or a logical operation, and may be specifically one or a combination of a plurality of processing modules such as a central processing unit (central processing unit, CPU), a graphics processing unit (graphics processing unit, GPU), a microprocessor unit (microprocessor unit, MPU), an application-specific integrated circuit (application-specific integrated circuit, ASIC), a field programmable gate array (field programmable gate array, FPGA), a complex programmable logic device (complex programmable logic device, CPLD), a coprocessor (assisting the central processing unit in completing corresponding processing and application), and a microcontroller unit (microcontroller unit, MCU).

The memory 1002 is configured to provide storage space, and the storage space may store data such as an operating system and a computer program. The memory 1002 may be one or a combination of a random-access memory (random-access memory, RAM), a read-only memory (read-only memory, ROM), an erasable programmable read-only memory (erasable programmable read-only memory, EPROM), a compact disc read-only memory (compact disc read-only memory, CD-ROM), and the like.

The communication interface 1003 may be configured to provide an information input or output for the at least one processor; and/or the communication interface 1003 may be configured to receive data sent by an external device and/or send data to the external device, and may be a wired link interface including an Ethernet cable or the like, or may be a wireless link (Wi-Fi, Bluetooth, universal wireless transmission, an in-vehicle communication technology, or other wireless communication technologies) interface. Optionally, the communication interface 1003 may further include a transmitter (for example, a radio frequency transmitter or an antenna) coupled to the interface, a receiver, or the like.

In a possible design, at least one processor 1001 in the electronic device 100 is configured to perform the foregoing method, for example, the intelligent driving method shown in FIG. 4.

Optionally, the processor 1001 may be a processor (referred to as a special-purpose processor for ease of differentiation) that is specially configured to perform the foregoing methods, or may be a processor that calls a computer program to perform the foregoing methods, for example, a general-purpose processor. Optionally, the at least one processor may further include both a special-purpose processor and a general-purpose processor. Optionally, the computer program may be stored in the memory 1002.

Optionally, at least one processor 1001 in the electronic device 100 is configured to invoke computer instructions to perform the following operations:
acquiring a first image and a second image that are respectively captured by the two side cameras; and obtaining a target image by processing the first image and the second image, where the target image indicates a field of view picture of a rearview mirror angle for the intelligent driving terminal, and the target image is used for intelligent driving.

Optionally, the processor 1001 is further configured to:
acquire a third image captured by the rear camera; and
obtain the target image by processing the first image, the second image, and the third image.

Optionally, the intelligent driving terminal further includes a screen, and the processor 1001 is further configured to:
send the target image to the screen for display.

Optionally, the screen includes a first screen and a second screen, and the first screen includes a left screen and/or a right screen; and the target image includes a first target image and a second target image, the first target image and the second target image respectively indicate field of view pictures of rearview mirror angles on two sides of the intelligent driving terminal, the left screen is used to display the first target image, and the right screen is used to display the second target image.

Optionally, the processor 1001 is further configured to:
perform linear correction and image processing on the first image, the second image, and the third image to obtain the target image, where the image processing includes one or more of bad pixel removal, white balance, image matting, image superimposition, image resizing, or the like.

Optionally, the processor 1001 is further configured to:
when the first screen and a send-for-display system on chip SoC of the autonomous driving controller are normal, send, by using the send-for-display SoC, the target image to the first screen for display; and when an exception occurs on the first screen or the send-for-display SoC of the autonomous driving controller, send the target image to the second screen for display.

Optionally, the target image further includes warning information. The processor 1001 is further configured to process information captured by a sensor to obtain the warning information.

Optionally, the warning information includes one or more of distance information, obstacle information, lane line information, traffic sign information, or the like.

Optionally, the information captured by the sensor includes the first image, the second image, and the third image; and the processor 1001 is further configured to obtain the target image based on the first image, the second image, the third image, and the warning information.

Optionally, the processor 1001 is further configured to:
when a preset case occurs in the intelligent driving terminal, adjust a field of view corresponding to the target image from a first preset value to a second preset value, where the second preset value is greater than the first preset value; and after the intelligent driving terminal exits the preset case, adjust the field of view corresponding to the target image from the second preset value to the first preset value.

Optionally, the preset case includes one or more of turning, lane change, determining a distance to a vehicle behind, or the like of the intelligent driving terminal.

This embodiment of this application and the foregoing method embodiment are based on a same concept, and bring same technical effects. For a specific principle, refer to the descriptions of the foregoing embodiments. Details are not described again.

This application further provides an intelligent driving terminal. The intelligent driving terminal includes an autonomous driving controller, two side cameras on a side of the intelligent driving terminal, a rear camera on the rear of the intelligent driving terminal, and a screen, the two side cameras and the rear camera are configured to capture a driving scene image, the screen is configured to display a target image, and the autonomous driving controller is configured to process the driving scene image, to control the intelligent driving terminal to implement the foregoing intelligent driving method, for example, the method described in FIG. 4.

This application further provides a chip, where the chip includes a logic circuit and an interface. The logic circuit is coupled to the interface. The interface is configured to input and/or output information. The logic circuit is configured to perform the foregoing intelligent driving method, for example, the method described in FIG. 4.

This application further provides a computer-readable storage medium, where the computer-readable storage medium stores instructions. When the instructions are run on at least one processor, the foregoing intelligent driving method, for example, the method described in FIG. 4, is implemented.

This application further provides a computer program product, where the computer program product includes computer instructions. When the computer instructions are executed by a computing device, the foregoing intelligent driving method, for example, the method described in FIG. 4, is implemented.

In embodiments of this application, the term "example", "for example", or the like is used to represent giving an example, an illustration, or a description. Any embodiment or design described by "example" or "for example" in this application should not be construed as being more preferred or advantageous than another embodiment or design. Exactly, use of the term "example", "for example", or the like is intended to present a relative concept in a specific manner.

In addition, unless otherwise stated, ordinal numbers such as "first" and "second" in embodiments of this application are for differentiation between a plurality of objects, but are not intended to limit an order, a time sequence, priorities, or importance of the plurality of objects. For example, a first device and a second device are merely for ease of description, and do not indicate a difference of the first device and the second device in terms of a structure and a degree of importance. In some embodiments, the first device and the second device may alternatively be the same device.

According to the context, the term "when" used in the foregoing embodiments may be interpreted as a meaning of "if", "after", "in response to determining", or "in response to detecting". The foregoing descriptions are merely optional embodiments of this application, but are not intended to limit this application. Any modification, equivalent replacement, improvement, or the like made within the concept and principle of this application shall fall within the protection scope of this application.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. An intelligent driving method, applied to an autonomous driving controller, wherein the autonomous driving controller is comprised in an intelligent driving terminal, the intelligent driving terminal further comprises two side cameras located on sides of the intelligent driving terminal and a rear camera located on the rear of the intelligent driving terminal, and the method comprises:
acquiring a first image and a second image that are respectively captured by the two side cameras; and
obtaining a target image by processing the first image and the second image, wherein the target image indicates a field of view picture of a rearview mirror angle for the intelligent driving terminal, and the target image is used for intelligent driving.

2. The method according to claim 1, wherein the intelligent driving terminal further comprises the rear camera located on the rear of the intelligent driving terminal, and obtaining the target image by processing the first image and the second image comprises:
acquiring a third image captured by the rear camera; and
obtaining the target image by processing the first image, the second image, and the third image.

3. The method according to claim 1 or 2, wherein the intelligent driving terminal further comprises a screen; and
after obtaining the target image by processing the first image, the second image, and the third image, the method further comprises:
sending the target image to the screen for display.

4. The method according to claim 3, wherein the screen comprises a first screen and a second screen, and the first screen comprises a left screen and/or a right screen; and
the target image comprises a first target image and a second target image, the first target image and the second target image respectively indicate field of view pictures of rearview mirror angles on the two sides of the intelligent driving terminal, the left screen is used to display the first target image, and the right screen is used to display the second target image.

5. The method according to any one of claims 2 to 4, wherein obtaining the target image by processing the first image, the second image, and the third image comprises:
performing linear correction and image processing on the first image, the second image, and the third image to obtain the target image, wherein the image processing comprises one or more of bad pixel removal, white balance, image matting, image superimposition, image resizing, or the like.

6. The method according to claim 4, wherein sending the target image to the screen for display comprises:
when the first screen and a send-for-display system on chip SoC of the autonomous driving controller are normal, sending, by using the send-for-display SoC, the target image to the first screen for display; and
when an exception occurs on the first screen or the send-for-display SoC of the autonomous driving controller, sending the target image to the second screen for display.

7. The method according to any one of claims 1 to 6, wherein the target image further comprises warning information; and
the method further comprises:
processing information captured by a sensor to obtain the warning information.

8. The method according to claim 7, wherein the warning information comprises one or more of distance information, obstacle information, lane line information, traffic sign information, or the like.

9. The method according to claim 7 or 8, wherein the information captured by the sensor comprises the first image, the second image, and the third image; and
obtaining the target image by processing the first image, the second image, and the third image comprises:
obtaining the target image based on the first image, the second image, the third image, and the warning information.

10. The method according to any one of claims 1 to 9, wherein the method further comprises:
when a preset case occurs in the intelligent driving terminal, adjusting a field of view corresponding to the target image from a first preset value to a second preset value, wherein the second preset value is greater than the first preset value; and
after the intelligent driving terminal exits the preset case, adjusting the field of view corresponding to the target image from the second preset value to the first preset value.

11. The method according to claim 10, wherein the preset case comprises one or more of turning, lane change, determining a distance to a vehicle behind, or the like of the intelligent driving terminal.

12. An intelligent driving apparatus, wherein the intelligent driving apparatus comprises a transceiver unit and a processing unit, wherein
the transceiver unit is configured to acquire a first image and a second image that are respectively captured by two side cameras located on sides of an intelligent driving terminal; and
the processing unit is configured to obtain a target image by processing the first image and the second image, wherein the target image indicates a field of view picture of a rearview mirror angle for the intelligent driving terminal, and the target image is used for intelligent driving.

13. The apparatus according to claim 12, wherein in obtaining the target image by processing the first image and the second image, the processing unit is specifically configured to:
acquire a third image captured by the rear camera; and
obtain the target image by processing the first image, the second image, and the third image.

14. The apparatus according to claim 12 or 13, wherein the intelligent driving terminal further comprises a screen; and
the transceiver unit is further configured to send the target image to the screen for display.

15. The apparatus according to claim 14, wherein the screen comprises a first screen and a second screen, and the first screen comprises a left screen and/or a right screen; and
the target image comprises a first target image and a second target image, the first target image and the second target image respectively indicate field of view pictures of rearview mirror angles on the two sides of the intelligent driving terminal, the left screen is used to display the first target image, and the right screen is used to display the second target image.

16. The apparatus according to claim 13, wherein in obtaining the target image by processing the first image, the second image, and the third image, the processing unit is specifically configured to:
perform linear correction and image processing on the first image, the second image, and the third image to obtain the target image, wherein the image processing comprises one or more of bad pixel removal, white balance, image matting, image superimposition, image resizing, or the like.

17. The apparatus according to any one of claims 14 to 16, wherein in sending the target image to the screen for display, the transceiver unit is specifically configured to:
when the first screen and a send-for-display system on chip SoC of the autonomous driving controller are normal, send, by using the send-for-display SoC, the target image to the first screen for display; and
when an exception occurs on the first screen or the send-for-display SoC of the autonomous driving controller, send the target image to the second screen for display.

18. The apparatus according to any one of claims 12 to 17, wherein the target image further comprises warning information; and
the processing unit is further configured to process information captured by a sensor to obtain the warning information.

19. The apparatus according to claim 18, wherein the warning information comprises one or more of distance information, obstacle information, lane line information, traffic sign information, or the like.

20. The apparatus according to claim 18 or 19, wherein the information captured by the sensor comprises the first image, the second image, and the third image; and
in obtaining the target image by processing the first image, the second image, and the third image, the processing unit is specifically configured to:
obtain the target image based on the first image, the second image, the third image, and the warning information.

21. The apparatus according to any one of claims 12 to 20, wherein
the processing unit is further configured to: when a preset case occurs in the intelligent driving terminal, adjust a field of view corresponding to the target image from a first preset value to a second preset value, wherein the second preset value is greater than the first preset value; and after the intelligent driving terminal exits the preset case, adjust the field of view corresponding to the target image from the second preset value to the first preset value.

22. The apparatus according to claim 21, wherein the preset case comprises one or more of turning, lane change, determining a distance to a vehicle behind, or the like of the intelligent driving terminal.

23. An intelligent driving terminal, wherein the intelligent driving terminal comprises an autonomous driving controller, two side cameras on sides of the intelligent driving terminal, a rear camera on the rear of the intelligent driving terminal, and a screen, the two side cameras and the rear camera are configured to capture a driving scene image, the screen is configured to display a target image, and the autonomous driving controller is configured to process the driving scene image, to control the intelligent driving terminal to implement the method according to any one of claims 1 to 11.

24. The intelligent driving terminal according to claim 23, wherein the intelligent driving terminal is a vehicle, an uncrewed aerial vehicle, or a robot.
